# EUROPEAN PATENT SPECIFICATION

(11) **EP 1 696 736 B1**
(45) Date of publication and mention of the grant of the patent: **18.02.2009**
(21) Application number: 04804854.0
(22) Date of filing: 15.12.2004
(51) Int. Cl.: A23K 1/18, A23K 1/16, A23K 1/00

(54) **ENRICHMENT PRODUCT FOR AQUATIC ORGANISMS COMPRISING A GELLED EMULSION**
ANREICHERUNGSPRODUKT FÜR WASSERLEBEWESEN, DAS EINE GELIERTE EMULSION ENTHÄLT
PRODUIT D'ENRICHISSEMENT POUR ANIMAUX AQUATIQUES CONTENANT UNE EMULSION GELIFIEE

(30) Priority: 16.12.2003 EP 03447291
(43) Date of publication of application: 06.09.2006
(73) Proprietor: Inve Technologies N.V., 9200 Dendermonde (BE)
(72) Inventor: DHERT, Philippe, B-9550 Herzele (BE)
(74) Representative: Van Reet, Joseph
(86) International application number: PCT/EP2004/053503
(87) International publication number: WO 2005/058065

(56) References cited:
- WO-A-02/071867
- US-A- 2 800 457
- US-A- 4 764 383
- OZKIZILCIK S ET AL: "EVALUATION OF OMEGA-3 FATTY ACID ENRICHMENT OF ARTEMIA NAUPLII AS FOOD FOR STRIPED BASS MORONE SAXATILIS WALBAUM LARVAE" JOURNAL OF THE WORLD AQUACULTURE SOCIETY, XX, XX, vol. 25, no. 1, 1 March 1994 (1994-03-01), pages 147-154, XP000560087

## Description

The present invention relates to an enrichment product for aquatic organisms, in particular for filter feeding organisms such as *Artemia* or rotifers, comprising a lipid emulsion consisting for 25 to 80% by weight of an aqueous phase and for 20 to 75% by weight of a lipid phase, which lipid phase contains lipids and is dispersed in the aqueous phase.

*Artemia* nauplii are the most widely used live prey species for larviculture primarily because they are very convenient to use and are readily available. However, it has long been recognised that *Artemia* nauplii are an incomplete food source for many larvae because of their paucity of essential n-3 highly unsaturated fatty acids (i.e. C₂₀ fatty acids or higher containing at least three unsaturated bonds). Many efforts have been invested in increasing the level of n-3 highly unsaturated fatty acids (HUFA) and the ratio docosahexaenoic acid : eicosapentaenoic acid (DHA:EPA) in *Artemia* nauplii and other live prey organisms by enriching (also called: "bio-encapsulation" or "boosting") them with algae, microparticles, yeast based diets, micro-encapsulated diets or marine oil emulsions. Highest enrichment levels are obtained when using emulsified concentrates (Merchie, G. 1996. Use of nauplii and metanauplii: 137-163. In: Manual on the production and use of life food for aquaculture. Lavens, P. and Sorgeloos, P (Eds)). The success and the convenience of the latter diet has led to commercially produced n-3 HUFA liquid enrichment emulsions (like "SELCO", registered product of INVE) appearing on the market and these are now widely used in marine hatcheries. WO 02/071867 describes the production of gelled particulate containing emulsions used for feeding aquatic organisms.

Notwithstanding the commercial success of the liquid emulsions as enrichment product for *Artemia*, there are some drawbacks in using liquid oily concentrates in marine hatcheries.

First of all it is difficult to distribute the emulsion in recipients due to the oily nature with low viscosity. The emulsion sticks to the distributing devices resulting in a considerable loss. Moreover, for the end-user, it is difficult to empty the whole recipient. A certain part of the emulsion will stick to the recipient's walls and thus will not be available for use. Furthermore, it is important for the enrichment of filterfeeders to feed them with certain accurate amounts of emulsion per volume. Weighing the emulsion on a precise balance is a difficult and labour asking job. When too much of the emulsion is pored out off the recipient, it can not be returned since the pored out emulsion has been exposed to oxygen. For the same reason, of each recipient containing lipid emulsion that has been opened, the entered oxygen is preferably to be taken out (for instance by adding N₂) to avoid oxidation of the remaining lipid emulsion in the recipient.

Prior to feeding, the emulsion concentrate is preferably mixed up with water by means of a kitchen blender and this for at least 3 minutes continuously mixing. Then, the emulsion is administered in consecutive portions at certain time intervals. This procedure is labour intensive and practically not always applied in a proper way. Small alterations in this procedure may result in different enrichment results in the *Artemia* nauplii, even when the procedure is applied by only one person all the time (Lavens, P.; Coutteau, P.; Sorgeloos, P. 1995. Laboratory and field variation in HUFA enrichment of Artemia nauplii: 137-140. In: Larvi'95. Lavens, P., Jaspers, E., Roelants, I. (Eds). European Aquaculture Society, Spec. Publ. No 24, Gent, Belgium, 521 pp).

Another drawback is that the density of the *Artemia* nauplii in the enrichment medium containing the enrichment product is limited. If the density of the *Artemia* nauplii could be increased, it would be possible to enrich more nauplii in a same tank volume. In standard enrichment procedures with the so far used lipid emulsions, densities of *Artemia* Instar I nauplii of not more than 200 or 300 /ml are commonly used. For higher densities, there is an increased risk of failure of the culture due to a shortage of oxygen in the enrichment medium. Indeed, a sudden drop of the oxygen level in the enrichment medium can be observed when adding the enrichment emulsion thereto. The oxygen shortage may be attributed to the additional oxygen consumption as a result of oxidation of the lipids in the enrichment product and the development of bacteria in the enrichment medium.

In practice higher densities are moreover also not used in view of the fact that, even if the enrichment is carried out under optimal conditions so that the risk of failure is reduced, such higher densities would result in a lower enrichment level of the nauplii. Increasing the enrichment level by adding more enrichment product is normally not possible since too high amounts of this product in the medium have a negative effect on the nauplii. The enrichment product does not only cause a reduction of the oxygen level in the enrichment medium but the quality of the enrichment medium is reduced. The lipids may for example start to accumulate onto the nauplii, in particular onto to the gills, thus causing a worse development or even death of the nauplii.

A final drawback of the known liquid emulsions is that when particulate materials (additives) such as pigments are added thereto, these materials sink to the bottom of the recipient duri ng storage of the product and when the liquefied emulsion is not shaken well before use, those important additives mainly stick to the bottom and are not or to a less instant utilised together with the oil emulsion.

An object to the present invention is therefore to provide a new enrichment product for aquatic organisms, which can more easily be handled, weighed and dosed in the enrichment medium, wherein optionally present particulate additives do not settle or at least less quickly than in liquid emulsions, and which enrichment product enable higher densities of the aquatic organisms in the enrichment medium and/or higher enrichment levels for a same density of aquatic organisms.

To this end, the enrichment product according to the invention is characterised in that it optionally comprises solid particles which have a size larger than 500 µm and which are substantially insoluble in water of 20°C, in that, measured without said optional solid particles, it consists for at least 30% by weight, and preferably for at least 50% by weight, of the lipid emulsion, and in that the aqueous phase of the emulsion contains at least one gelling agent so that the aqueous phase is in the form of a water soluble gel and the enrichment product in the form of a gelled body, which gelled body comprises at least 1 gram of said emulsion and releases stable lipid globules when being dissolved in water.

According to the invention, it has been found quite surprisingly that by adding a gelling agent the liquid emulsions of the prior art could be transformed into a gelled body, which is usually kneadable, and that in this way, a number of longstanding problems observed with the prior art liquid enrichment emulsions are solved.

The enrichment product according to the invention is easy to handle, does not stick to wrapping material or containers, can be easily weighed and does not need to be premixed in water before adding it to the culture tanks. Moreover, not only water soluble but also particulate additives can be included easily homogeneously into the enrichment product without causing any precipitation during storage.

Surprisingly, as a result of the fact that the lipid emulsion is in the form of a gelled body, higher enrichment levels of highly unsaturated fatty acids could be obtained in *Artemia* nauplii, for a same amount of enrichment product and a same density, compared to *Artemia* enriched with the known liquid emulsions that are not gelled. Moreover, enrichment of *Artemia* with the enrichment product according to the present invention allows higher densities, up to more than 350 nauplii per ml till more than 500 nauplii per ml whilst still obtaining the required enrichment level. The enrichment product according to the invention can thus be more effectively used than the known liquid enrichment emulsions.

The advantageous effects of the solid enrichment product according to the invention may be explained by the fact that as soon as it is introduced in the enrichment medium, the lipid globules are slowly released in the medium, are stable in the medium so that they do not rise immediately to the surface thereof and can be taken up easily by the aquatic organisms. Since less organic material is thus available in the enrichment medium, the development of oxygen consuming bacteria is less pronounced in the medium. Moreover, in the gelled body, the unsaturated lipids are less subjected to oxidation so that the oxygen in the enrichment medium is also less consumed in this way. Consequently, more oxygen remains available for the aquatic organisms thus enabling higher densities. Since the lipid globules released in the medium are stable and are more effectively taken up by the filter feeding organisms, a smaller amount thereof is lost for example by the formation of an oil film on the medium or by sticking to the walls of the tank. Although the prior art emulsions also introduce stable lipid globules in the water, after some time a portion of these lipid globules are lost by the formation of an oil film on the medium or by sticking to the walls of the tank. The stable lipid globules are indeed formed by so-called micelles which consist of lipid globules enclosed in a layer of one or more emulsifiers. Such micelles are much more stable than lipid globules as such, which immediately rise to the surface of the medium or stick to the walls of the tank or to any solids contained in the medium when introduced in the medium. However, after some time or under the influence of certain stresses (shear stresses) they may also be destroyed so that their lipid content is released in the medium and rises to the surface or sticks to the walls. Due to the fact that with the product according to the present invention the lipid globules are more gradually introduced (released) in the medium, they can more effectively be taken up by the filter feeding organisms so that a smaller amount of them will be lost.

Another advantage of the product according to the invention is that the unsaturated lipids present therein are less prone to oxidation than in the liquid emulsions. Especially highly unsaturated fatty acids, which are the most important nutrients for the enrichment, are oxidised very easily as soon as the emulsion comes into contact with air. More importantly, the enrichment procedure itself usually includes a combination of vigorous aeration, illumination and temperatures of approximately 27°C, all of which tend to accelerate autoxidation of highly unsaturated fatty acids and the formation of potentially toxic, oxidation products. This may cause a reduced enrichment level of highly unsaturated fatty acids in *Artemia* nauplii. Moreover, there is an additional hazard that in later stages of enrichment, *Artemia* could be feeding on lipid peroxides and other potentially toxic oxidation products which would then be passed to the fish and crustacean larvae.

In a preferred embodiment of the enrichment product according to the invention it comprises less than 10% by weight, preferably less than 5% by weight, of solid food particles which are larger than 500 µm, and preferably less than 10% by weight, more preferably less than 5% by weight, of solid food particles which are larger than 100 µm. Filterfeeders such as Artemia and rotifers are usually sieved out of the medium by means of a fine sieve, having for example a mesh size of about 100 or more particularly about 120 µm. Consequently, most of the solid food particles which remain in the medium will be removed through the sieve when sieving the filterfeeders out of the enrichment medium. It should be noted that the enrichment product according to the invention may comprise larger solid particles, i.e. particles which will usually be (much) larger than 500 µm to adjust the floating characteristics of the gelled bodies. Such non-food particles can however be easily separated from the filterfeeders, either by picking them by hand out of the medium or by filtering them of by means of a coarse sieve.

In another preferred embodiment of the enrichment product according to the invention, the gelling agent and the amount thereof are selected so that it takes between 0.5 and 5 hours for the enrichment product to release 50% by weight of its emulsion when introducing a spherical piece of the enrichment product, which measures 5 grams without any of said optional solid particles larger than 500 µm, in 300 ml of distilled water of 20°C which is contained in a flat-bottom cylindrical beaker with an inner diameter of 85 mm and which is continuously stirred at 120 rpm with a cylindrical magnetic rod which rotates on the bottom of the beaker, underneath the piece of enrichment product, and has a length of 40 mm and a diameter of 8 mm.

It has been found that with such an enrichment product a sufficiently sustained release of the product, in particular of the oil globules, can be achieved by selecting an appropriate size of the gelled body or bodies which are introduced in the medium.

In a further preferred embodiment of the enrichment product according to the invention the emulsion comprises at least 30% by weight, preferably at least 45% by weight and more preferably at least 55% by weight of said lipids. The lipids more preferably contain fatty acids, at least 20% by weight of which are (n-3) highly unsaturated fatty acids containing more than two double bonds and having a chain length of at least twenty carbon atoms.

Such enrichment products with high amounts of HUFA's only need to be used in relatively small amounts to achieve an effective enrichment of the aquatic organisms. Notwithstanding the relatively high lipid content, it has been found that the liquid emulsion could be transformed into a gelled body by the use of one or more gelling agents.

In still a further preferred embodiment of the enrichment product according to the invention, the gelled body comprises at least one anti-microbial agent, in particular an anti-microbial agent dissolved in the aqueous phase.

An advantage of this embodiment is that the enrichment product enables to assure concentrations of the disinfecting agent in the enrichment medium which are non-lethal for the aquatic organisms but which are at the same time sufficient to reduce the bacterial load in the enrichment medium.

Advantageously, the gelled body has a weight of at least 10 g, preferably at least 50 g, more preferably at least 100 g and most preferably at least 200 g, the weight of the optional solid particles larger than 500 µm not included. In general, the larger the gelled body, the longer the enrichment product particles and the optional anti-microbial agent and/or probiotic micro-organisms are released.

The present invention also relates to a method to culture fish or crustaceans wherein live prey aquatic organisms, in particular marine filter feeding organisms such as *Artemia* and/or rotifers, are enriched in an enrichment medium with an enrichment product, comprising a lipid emulsion consisting for 25 to 80% by weight of an aqueous phase and for 20 to 75% by weight of a lipid phase, before being fed in a culture medium to larvae of the fish or crustaceans, characterised in that the live prey aquatic organisms are enriched with an enrichment product according to the invention. The advantages obtained by this method can be deduced from the advantages set forth hereabove for the enrichment product and include less labour for enrichment of the prey organisms, a possible higher production capacity of the enrichment tanks, a possible higher enrichment level of the prey organisms and a more efficient use of the enrichment product. Consequently, the method according to the invention requires less labour, less or smaller capital outlay for enrichment installations and less costs for enrichment products.

Other particularities and advantages of the invention will become apparent from the following more detailed description of the particular embodiments of the enrichment product and the culture method according to the present invention.

The enrichment product according to the invention is intended to enrich aquatic organisms, in particular filter feeding organisms like rotifers, *Artemia* nauplii and bivalves, with lipids and more particularly with lipids comprising relatively high levels of highly unsaturated fatty acids (HUFA's). Rotifers and *Artemia* nauplii don't need the lipids for themselves but are used to transfer the lipids to the predator organisms (fish or shrimp larvae). In order to enable the aquatic organisms to take up the lipids in the enrichment medium, the lipids are contained in a lipid emulsion, more particularly in an oil in water emulsion which, when added to the enrichment medium provide lipid (oil) globules, more than 90% by number of which measure between 0.1 and 10 µm. For filterfeeders such as Artemia and rotifers, the globules or solid particles preferably have a size smaller than 50 µm to enable the filterfeeders to ingest such globules or particles.

In the enrichment product according to the invention, the lipid emulsion consists for 25 to 80% by weight of an aqueous phase and for 20 to 75% by weight of a lipid phase which is dispersed in the continuous aqueous phase. In contrast to the prior art liquid emulsions, the aqueous phase contains at least one gelling agent so that the aqueous phase is in the form of a water soluble gel and the enrichment product in the form of a gelled body which releases stable lipid globules, in particular micelles, when dissolved in water of for example 20°C. The gelled body may show different consistencies varying from a kneadable material to a rather rigid body. An advantage of an enrichment prod uct in the form of a gelled body is that, in contrast to the liquid emulsions, it can be formulated so that it does not stick to the packaging, it can be weighed more easily or cut easily into several parts and does not need to be premixed with water but can be administered as such to the enrichment medium.

The gelled emulsion preferably comprises at least 30% by weight, preferably at least 45% by weight and more preferably at least 55% by weight of lipids. Although lower amounts of lipids are possible, for example amounts as low as 20% by weight, higher amounts are preferred in order to achieve a stronger enrichment of the aquatic organisms. Since especially enrichment with HUFA's is desired, the lipids preferably contain fatty acids, at least 20% by weight of which are (n-3) highly unsaturated fatty acids.

In addition to the lipid emulsion, the enrichment product according to the invention can comprise solid particles which are not dissolved in the aqueous or in the lipid phase of the emulsion. These solid particles can be divided into two groups, namely in solid particles which have a size larger than 500 µm and solid particles which have a size smaller than 500 µm. According to the invention, when disregarding the presence of the optional solid particles larger than 500 µm, i.e. measured without the solid particles larger than 500 µm which may be present in the enrichment product, the enrichment product consists for at least 30% by weight, and preferably for at least 50% by weight, of the emulsion so that it contains at the most 70% by weight of solid particles having a particle size smaller than 500 µm. In this way, the gelled emulsion can provide a sufficiently coherent matrix wherein the particles of the particulate material are, preferably homogeneously, embedded and the enrichment product can moreover contain a relatively high amount of lipids. Preferably, the enrichment product consists, the solid particles larger than 500 µm not included, for at least 60% by weight, more preferably for at least 70% by weight and most preferably for at least 80% by weight of the lipid emulsion.

Rotifers and Artemia are usually sieved out of the enrichment medium by means of a fine sieve, having for example a mesh size of about 118 µm. Any small particles, in particular food particles, present in the medium preferably passes the sieve. When the enrichment product comprises solid food particles which are larger than 500 µm, or larger than 100 µm, and which do not dissolve in water, they are preferably only present in an amount of at the most 10% by weight, preferably in an amount of at the most 5% by weight in the enrichment product. In this way, the enrichment medium is not contaminated with a large amount of food which cannot be taken up by the filterfeeders and which would thus be lost anyway. The expression "solid food particles" is used to indicate food particles which can be ingested and digested by aquatic organisms, in particular by larger adult aquatic organisms such as fish or shrimp. As explained hereinafter, the enrichment product may however contain larger, non-food solid particles to adjust in particular the floating characteristics of the gelled body in the enrichment medium.

The enrichment product, more particularly the lipid emulsion thereof, can also comprise substances or compounds which are dissolved in the aqueous or in the lipid phase of the emulsion. In contrast to the solid, undissolved particulate materials, these dissolved substances or compounds are comprised in the weight of the emulsion, and more particularly in the weight of the aqueous phase thereof when they are dissolved in the aqueous phase, or in the weight of the lipid phase when they are dissolved in the lipid phase.

The gelled body of the enrichment product according to the invention may have any arbitrary shape but is preferably spherical or cylindrical for practical use. It comprises at least 1 g, and preferably at least 10 g of the lipid emulsion. Since the enrichment tanks of marine organisms in commercial hatcheries often are of the size of 100 l or more, the total weight of the gelled body, before being introduced in the culture medium, is preferably higher than 50 g, more preferably higher than 100 g and most preferably higher than 200 g, the weight of any optional solid particles larger than 500 µm not included.

When the enrichment product according to the invention is introduced in the aqueous enrichment medium, the gel in the lipid emulsion dissolves rather slowly so that the lipid (oil) globules are released. Compared to the existing lipid emulsions, the globules are released more slowly. The release rate cannot only be controlled by the formulation of the gel but also by the size and the shape of the gelled body or bodies. The release rate can for example be easily increased by using, instead of one gelled body of a predetermined weight, more gelled bodies which have a same total weight but which are each of a smaller size. An advantage of the gelled body is in this respect that it can easily be divided (cut) into smaller pieces. On the other hand, when the gelled bodies are kneadable, it is possible to knead two or more gelled bodies to one larger body. The optimum size of the gelled body or bodies added to the enrichment tank can thus easily be determined experimentally by the skilled person.

An important advantage of the enrichment product according to the invention is that the released globules from the gelled emulsion are continuously taken up by the prey organisms. In this way the emulsion is more effectively taken up by the organisms and less product is lost. The lipids are more particularly less subjected to oxidation and are not, or to a less extend, allowed to adhere to the walls or to form a film (so that they can no longer be taken up by the filter feeding organisms).

Experiments have demonstrated that higher enrichment levels in *Artemia* can be obtained with the enrichment product according to the invention compared to a liquefied oil emulsion containing the same amount of emulsion. Moreover, the filter feeding organisms can be enriched in a higher density. Standard enrichment procedures with lipid emulsions require densities of *Artemia* nauplii Instar I of not more than 200 or 300 / ml. Densities higher than 300 / ml are mostly not possible due to lack of oxygen during and the formation of toxic oxidation products during the enrichment procedure. Enrichment of *Artemia* with the enrichment product according to the present invention, in which the lipid globules are slowly released, allows higher densities, up to more than 350 nauplii per ml, preferably more than 400 nauplii per ml and most preferably more than 450 nauplii per ml.

For producing the enrichment product according to the invention use can be made of the commercially available lipid emulsions for the enrichment of marine filter feeding aquaculture organisms Examples of suitable oil emulsions all the "Selco" - type (registered product by INVE) oil emulsions for enrichment of *Artemia* nauplii. Other commercially available oil emulsions are suitable as well. Such oil emulsions contain emulsifiers which are therefore also present in the enrichment product according to the invention, more particularly in such an amount that a stable emulsion is obtained. Such a stable emulsion releases stable lipid globules in the enrichment medium, more particularly micelles consisting of oil globules encloses in a layer formed by the emulsifier or emulsifiers. By the expression "stable lipid globules" is meant that the lipid globules do not rise immediately to the surface of the medium like oil droplets as such but contain one or more stabilisers, in particular one or more emulsifiers, which keep the lipid globules for a longer time in the medium.

*Artemia* are usually enriched with lipids comprising highly unsaturated fatty acids before they are fed as live prey organisms to larval fish or shrimp. In the gelled body of the present invention, globules of lipids, preferably those with higher than 20% of the total lipid content of highly unsaturated fatty acids like EPA and DHA, are used.

For producing the enrichment product according to the invention, use can be made of different gelling agents, or mixtures of gelling agents, and of different amounts of such gelling agents. Preferably, the gelling agent and the amount thereof is selected in such a manner that it takes between 0.5 and 5 hours for the enrichment product to release 50% by weight of its emulsion when introducing a spherical piece of the enrichment product, which measures 5 grams without any of said optional solid particles, in 300 ml of distilled water of 20°C which is contained in a flat-bottom cylindrical beaker with an inner diameter of 85 mm and which is continuously stirred at 120 rpm with a cylindrical magnetic rod which rotates on the bottom of the beaker, underneath the piece of enrichment product, and has a length of 40 mm and a diameter of 8 mm. Half an hour after introducing such a piece of enrichment product in the beaker of water, preferably at least 5% by weight of the enrichment product is released. Most preferably, the above described release properties are also achieved when the water wherein the enrichment product is introduced has a temperature of 30°C. In this way, the enrichment product can be used under different temperature conditions.

The gelling agent comprises preferably a gum, belonging to a large family of water soluble celluloses (C₆H₁₀O₅)ₙ like: methylcellulose, ethylcellulose, hydroxypropylcellulose, hydroxy-propylmethylcellulose (HPMC), methylethylcellulose, carboxymethyl-cellulose (CMC) etc. The gelling agent comprises preferably between 1 and 10% by weight of the total weight of the enrichment product. The thus obtained gelled emulsion has a good constitution which allows above mentioned characteristics with respect to preventing sticking to the recipients, easy handling and so on. Inclusion of more than 1% and less than 10% CMC of the gelled emulsion gives a good constitution to the gelled enrichment product but with HPMC the gelled product becomes more elastic and rolls in the hands without sticking to the hands or to the recipients. Different hydrocolloids and/or binders can improve the elasticity and the consistency and/or the release features of the enrichment product according to the invention.

As set forth here above, particulate additives can be easily incorporated in the gelled body or bodies of the enrichment product according to the invention. The incorporation of particulate additives in diets often causes problems regarding the deposit of these additives in the diet itself, mainly when the diets are liquid, which is often the case for live food organisms. When diets with deposited additives are administered to the prey organisms, unbalanced portions are introduced in the water. Incorporation of the particulate additives in a gelled diet according to the invention, wherein the particulate material is distributed in the matrix formed by the gelled lipid emulsion, prevents deposit of the particles in the diet. Examples of commonly used particulate additives that normally deposit easily in diets, and which comprise particles smaller than 500 µm, in particular smaller than 100 µm and more particularly smaller than 50 µm, are: micro-algal cells or cell fragments, probiotic micro-organisms, pigments (astaxanthine, canthaxanthine...), vitamins (Vitamin B12...) and attractants.

In a preferred embodiment, the gelled body contains, measured without the optional solid particles which have a size larger than 500 µm, i.e. those large solid particles not included, more than 1%, preferably more than 2% and more preferably more than 5% by weight dry matter algal cells and/or fragments on total weight basis. These cells and/or cell fragments are distributed in the matrix formed by the gelled lipid emulsion. The inclusion of algal material makes the lipid diet more attractive for the prey organisms. Partly dried algal diets are difficult to be fed to prey organisms since they settle out easily on the bottom of the tank or clump together. When the algal cells and / or fragments are added to the gelled diet, they will not clump or sediment on the bottom of the tank.

In a further preferred embodiment of the enrichment product according to the invention, the gelled body comprises probiotic micro-organisms. Meant under probiotic micro-organisms are certain micro-organisms (live or dead bacteria, yeasts...) that can be actively added to the enrichment product in order to achieve beneficial effects for the prey organisms or the predator (e.g.: enhanced digestibility, improved immune system) or that can replace at least partially the existing bacterial population present in the prey organism, the predator or in the surrounding medium mostly to prevent diseases. Examples of probiotic micro-organisms are (but not limited to): *Lactobacillus* strains, *Enterococcus* strains, *Bacillus* strains, *Pediococcus* strains, *Saccharomyces* strains etc). Minimum amounts of probiotic micro-organisms to have any beneficial effect are 10⁷ cells per gram emulsion (in case of dead bacteria or spores) or 10⁷ colony forming units per gram emulsion in case of live bacteria and 10⁷ cells per gram emulsion in case of yeast. Total amount of probiotic micro-organisms is normally less than 1 % of the emulsion on weight basis.

Usually it is important that certain agents in the enrichment of marine organisms are administered in low quantities at several times to avoid overdoses or settlement and pollution of the additives in the enrichment tank. When incorporated in the gelled enrichment product, together with the lipid emulsion, those agents will be slowly released at the same speed as the oil droplets or at a similar speed. In this way, the distribution of the agents can be better controlled. In the enrichment product according to the invention, anti-microbial agents can be incorporated in the gelled body or bodies to control the hygienic properties of the enrichment medium. It is important to introduce these anti-microbialagents in predetermined quantities within determined ranges in the enrichment medium. A concentration that is too low will have no effect on the microbial community of the enrichment medium. On the other hand, too high concentrations will adversely affect the aquatic organisms (bivalves, *Artemia* etc). Initial concentrations of the disinfecting agent, incorporated in live feed diets is normally too high because of the gradual break down of the anti-microbial agent during the culture or enrichment of bivalves or *Artemia*. The initial concentration of the incorporated anti-microbial agent in the enrichment product according to the invention will be lower because it will only be partly released when introduced in water. The gelled body will continue to release the further agents in small amounts, distributed over a certain period. This way, the distribution of the anti-microbial agents is better controlled in the enrichment medium and since lower, but more constant concentrations will be available in the culture tank, more different types of anti-microbial agents can be administered for those particular applications.

The gelled enrichment product according to the invention can be introduced as such in the enrichment medium. However, in order to modify for example the flotation characteristics of the product, it can be used in combination with a carrier or support material. The enrichment product may for example be arranged around one or more relatively large core pieces of a light material such as polystyrene. It is also possible to embed smaller particles in the enrichment product, for example heavier particles in order to make the enrichment product sink to the bottom of the tank. The carrier or support material will usually be in the form of particles larger than 500 µm. Such particles also embrace larger pieces of carrier or support material. The larger the particles of the carrier or support material, the more easily they can be removed afterwards from the enrichment medium.

Most important filter feeding organisms which can be enriched with the enrichment product according to the present invention are *Artemia* nauplii, since those species are worldwide used live prey organisms for shrimp and fish larvae. However, also non-prey filter feeding organisms such as bivalves can be enriched with the enrichment product according to the invention.

Since the filter feeding prey organism are cultured and enriched in the marine hatcheries during the culture of fish and also crustacean like shrimp, the invention also relates to the culture of such fish or crustacean wherein the live prey organisms are enriched with an enrichment product according to the invention before being fed to the fish or crustacean.

In the following examples all percentages are expressed as weight percentages and are calculated on the final wet weight.

### Example 1

DHA Selco^{™}: 90%
Gelling agent (HPMC): 4%
Vitamins (oil soluble): 3%
Non-soluble silica powder (flowing agent): 3%

Mix the DHA Selco^{™} lipid emulsion (containing about 69% lipid phase and 31 % aqueous phase) with the vitamins. Add the gelling agent and mix well. Let the mixture stand for 5 minutes so that the gelling agent has time to bind the water of the lipid emulsion. Then mix again shortly. Add the flowing agent so that the product can easily come out of the container.

Preserve the obtained product in air-tight bags, preferably under vacuum. The emulsion in the obtained enrichment product comprises about 32% gel (including the water in the emulsion and the gelling agent) and about 65% lipids on total weight basis (including the lipids of the emulsion and the vitamins dissolved therein). In addition it comprises about 3% by weight of water unsoluble solid particles smaller than 500 µm, more particularly smaller than 100 µm.

The diet does not stick to the hands or to the packaging. It can be easily weighed and can be introduced as such to the culture medium.

Table 1 shows the different enrichment levels of docosahexaenoic acid (DHA), the total (n-3) highly unsaturated fatty acids (n-3 HUFA) and the ratio DHA over EPA in *Artemia* nauplii enriched with the liquid oil emulsion (DHA Selco Stable) and the gelled emulsion prepared as in example 1.

**Table 1: Enrichment levels in Artemia enriched with the emulsion compared to the corresponding gel.**

| Density 500 nauplii/ml | 12 hours after inoculation T12 | | 24 hours after inoculation T24 | |
|---|---|---|---|---|
| | Emulsion | Gel | Emulsion | Gel |
| n-3 HUFA (mg/g) (DW) | 24 | 40 | 41 | 56 |
| DHA (mg/g DW) | 11 | 24 | 23 | 35 |
| DHA / EPA | 1.2 | 1.8 | 1.5 | 1.9 |

Enrichment was performed in cylindrical conical tanks with 90 l water with a salinity of 35 ppt and a temperature of 28°C. The pH was controlled at 7.5. Stocking density was 500 nauplii per ml. In case of the emulsion, the enrichment product was added at the start of the enrichment and 12 hours later in 2 portions of 300 mg enrichment product per I. The gelled product, on the contrary, was added only at the start of the enrichment procedure in an amount containing the same amount of lipids than the emulsion. Samples of *Artemia* nauplii to analyse the levels of the HUFA were taken 12 hours after the start of enrichment (T12) and at the end of the enrichment, thus 24 hours after the start of enrichment (T24).

**Table 2: Enrichment levels in Artemia enriched in different densities (300 and 500 Artemia nauplii / ml).**

| Density | 300 *Artemia* nauplii / ml | | 500 *Artemia* nauplii / ml | |
|---|---|---|---|---|
| | Emulsion | Gel | Emulsion | Gel |
| n-3 HUFA (mg/g DW) | 58 | 76 | 41 | 56 |
| DHA (mg/g DW) | 35 | 42 | 23 | 35 |
| DHA / EPA | 1.9 | 2.2 | 1.5 | 1.9 |

Table 2 gives the enrichment levels in *Artemia* nauplii, enriched with the emulsion compared to the corresponding gelled emulsion. *Artemia* nauplii were enriched in normal densities (300/ml) and in high densities (500/ml). Higher enrichment levels are obtained with the gel compared to the emulsion (containing same quality and quantity of lipids) when enrichment is done at the same density. In higher densities, lower enrichment levels are obtained (less enrichment product for more *Artemia* nauplii), but the gelled enrichment product is better utilised compared to the emulsion diet. When the gelled diet according to the invention is fed to the *Artemia* nauplii at high densities (500 nauplii / ml), similar enrichment levels in *Artemia* nauplli are reached as when the standard emulsion diet is fed to *Artemia* nauplil in low densities (300 nauplii / ml). Thus, more *Artemia* nauplii can be enriched with the same enrichment levels when the gel is used.

Slow release test with the enrichment product obtained in example 1 Six spherical pieces of 5 g were made of the product obtained in example 1. Each piece was introduced in a 600 ml beaker (inner diameter 85 mm) with a flat bottom containing 300 ml of water. Three beakers were filled with filtered natural seawater (30ppt) and maintained at a temperature of 28°C. Three other beakers were filled with distilled water and maintained at a temperature of 20°C. The water in all beakers was continuously stirred by means of a cylindrical magnetic rod (40 mm length and 8 mm diameter) at about 120 rpm. The magnetic rod rotated on the bottom of the beaker, underneath the piece of enrichment product. If the magnetic rod would interfere with the enrichment product and cause significant release because of mechanical contact between the product and the rod, this has to be prevented for example by placing the product in a thin-walled plastic cup provided with holes at least in its cylindrical side wall so that the cup and the enrichment product introduced therein is not in contact with the magnetic rod.Every half hour, each product was taken out of the beaker by means of a sieve with a 118 µm mesh size and weighed on the balance. After weighing they were returned to the beakers. The test lasted for 6 hours.

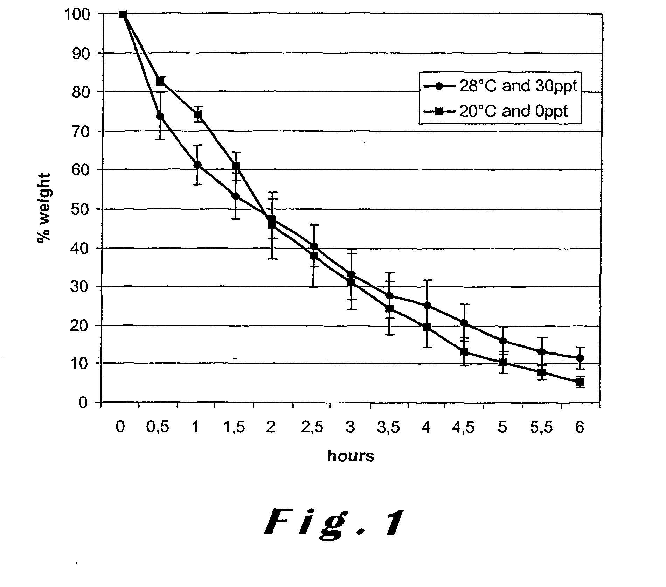

The average results are presented in Figure 1. Under the mentioned conditions, the products were released slowly between 0.5 hour and 6 hours due to the fact that the gel dissolved slowly in the water. In both conditions, the products had lost more than 5% but less than 50% of their weight after 0.5 hour. After 2 hours about 50% by weight of the products had been released. After 5 hours, less than 20% of the product was left. Difference in temperature (20°C or 28°C) or salinity (0 ppt or 30 ppt) had substantially no effect on the release of the products.

When the water with released product was poured through the sieve, apart from the piece of enrichment product itself, no food particles remained on the mesh. The released product consisted in stable emulsion particles or oil globules with a size < 100 µm (edible for Artemia or rotifers). More than 90% by weight of these globules had a size of between 0.1 and 10 µm. The oil globules did not rise immediately to the surface of the water but most of them were suspended in the water. Due to the presence of the emulsifier, they where in fact in the form of micelles, i.e. in the form of oil globules enclosed by a layer of emulsifier.

### Example 2

DHA Selco^{™}: 90%
Gelling agent (HPMC): 5%
Vitamines (oil soluble): 1%
Chlorella algae: 3%
Non-soluble silica powder (flowing agent): 1%

Mix the DHA Selco^{™} lipid emulsion (containing about 69% lipid phase and 31% aqueous phase) with the vitamins and the dried Chlorella algae. Add the gelling agent and mix well. Let the mixture stand for 5 minutes so that the gelling agent has time to bind the water of the lipid emulsion. Then mix again shortly. Add the flowing agent so that the product can easily come out of the container.

Preserve the obtained product in air-tight bags, preferably under vacuum. The obtained enrichment product comprises about 33% gel (including the water in the oil emulsion and the gelling agent) and about 63% lipids (including the lipids of the lipid emulsion and the vitamins dissolved therein) on total weight basis.

The diet does not stick to the hands or to the packaging. It is easily weighed and can be introduced as such to the culture medium.

### Example 3

Super Selco^{™}: 88.7%
Gelling agent (HPMC): 3.5%
Haematococcus: 3.3%
Non-soluble silica powder (flowing agent): 2.5%
Anti-microbial agents (water-soluble): 2%

Mix the Super Selco^{™} emulsion (containing about 67% lipid phase and 33% aqueous phase) with the *Haematococcus* algae and the anti-microbial agents. Add the gelling agent and mix well. Let the mixture stand for 5 minutes so that the gelling agent has time to bind the water of the lipid emulsion. Then mix again shortly. Add the flowing agent so that the product can easily come out of the container.

Preserve the obtained product in air-tight bags, preferably under vacuum. The obtained enrichment product comprises about 34.5% gel (including the water of the emulsion, the water soluble anti-microbial agents and the gelling agent) and about 59.70% lipids on total weight basis.

The diet does not stick to the hands nor to the packaging. It is easily weighed and can be introduced as such to the culture medium.

### Example 4

Super Selco^{™}: 35%
Gelling agent (HPMC) : 8%
Water: 54%
Non-soluble silica powder (flowing agent): 3%

Dilute the Super Selco^{™} emulsion (containing 67% oil and 33% aqueous phase) with water and mix well till a new emulsion appears. Add the gelling agent and mix well. Let the mixture stand for 5 minutes so that the gelling agent has time to bind the water of the emulsion. Then mix again shortly. Add the flowing agent so that the product can easily come out of the container.

Preserve the obtained product in air-tight bags, preferably under vacuum. The obtained enrichment product comprises about 73.5% gel (including the added water, the water of the oil emulsion and the binder) and about 23.5% lipids on total weight basis.

The diet does not stick to the hands nor to the packaging. It is easily weighed and can be introduced as such to the culture medium.

### Example 5

DHA Selco^{™}: 90%
Gelling agent (HPMC) : 5%
Amino acids: 4%
Non-soluble silica powder (flowing agent): 1%

Mix the DHA Selco^{™} emulsion (containing 69% oil phase and 31% aqueous phase) with the amino acids. Add the gelling agent and mix well. Let the mixture stand for 5 minutes so that the gelling agent has time to bind the water in the emulsion. Then mix again shortly. Add the flowing agent so that the product can easily come out of the container.

Preserve the obtained product in air-tight bags, preferably under vacuum. The obtained enrichment product comprises about 33% gel (including the water of the oil emulsion and the binder) and about 66% lipids (including the lipids of the emulsion and the amino acids dissolved in the lipid phase) on total weight basis.

The diet does not stick to the hands nor to the packaging. It is easily weighed and can be introduced as such to the culture medium.

## Claims

1. Enrichment product for aquatic organisms, in particular for filter feeding organisms such as *Artemia* or rotifers, comprising a lipid emulsion consisting for 25 to 80% by weight of an aqueous phase and for 20 to 75% by weight of a lipid phase, which lipid phase contains lipids and is dispersed in the aqueous phase, **characterised in that** the enrichment product optionally comprises solid particles which have a size larger than 500 µm and which are substantially insoluble in water of 20°C, **in that**, measured without said optional solid particles, the enrichment product consists for at least 30% by weight, and preferably for at least 50% by weight, of said emulsion, and **in that** the aqueous phase of said emulsion contains at least one gelling agent so that the aqueous phase is in the form of a gel which is soluble in distilled water of 20°C and the enrichment product in the form of a gelled body, which gelled body comprises at least 1 gram of said emulsion and releases stable lipid globules when being dissolved in water.

2. Enrichment product according to claim 1, **characterised in that** the stable lipid globules released in the water are in the form of micelles.

3. Enrichment product according to claim 1 or 2, **characterised in that** it comprises less than 10% by weight, preferably less than 5% by weight, of solid food particles which are larger than 500 µm, and preferably less than 10% by weight, more preferably less than 5% by weight, of solid food particles which are larger than 100 µm.

4. Enrichment product according to any one of the claims 1 to 3, **characterised in that** the gelling agent and the amount thereof are selected so that it takes between 0.5 and 5 hours for the enrichment product to release 50% by weight of its emulsion when introducing a spherical piece of the enrichment product, which measures 5 grams without any of said optional solid particles, in 300 ml of distilled water of 20°C which is contained in a flat-bottom cylindrical beaker with an inner diameter of 85 mm and which is continuously stirred at 120 rpm with a cylindrical magnetic rod which rotates on the bottom of the beaker, underneath the piece of enrichment product, and has a length of 40 mm and a diameter of 8 mm.

5. Enrichment product according to claim 4, **characterised in that** the gelling agent and the amount thereof are further selected so that at least 5% by weight of the emulsion of the enrichment product is released 0.5 hours after introducing a spherical piece of the enrichment product, which measures 5 grams without any of said optional solid particles, in 300 ml of distilled water of 20°C which is contained in a flat-bottom cylindrical beaker with an inner diameter of 85 mm and which is continuously stirred at 120 rpm with a cylindrical magnetic rod which rotates on the bottom of the beaker, underneath the piece of enrichment product, and has a length of 40 mm and a diameter of 8 mm.

6. Enrichment product according to any one of the claims 1 to 5, **characterised in that** said emulsion comprises at least 30% by weight, preferably at least 45% by weight and more preferably at least 55% by weight of said lipids.

7. Enrichment product according to any one of the claims 1 to 6, **characterised in that,** measured without said optional solid particles, it consists for at least 60% by weight, preferably for at least 70% by weight and more preferably for at least 80% by weight of said lipid emulsion.

8. Enrichment product according to any one of the claims 1 to 7, **characterised in that** said lipids comprise fatty acids, at least 20% by weight of which are (n-3) highly unsaturated fatty acids containing more than two double bonds and having a chain length of at least twenty carbon atoms.

9. Enrichment product according to any one of the claims 1 to 8, **characterised in that** said gelled body has a weight of at least 10 g, preferably at least 50 g, more preferably at least 100 g and most preferably at least 200 g, the weight of said optional solid particles not included.

10. Enrichment product according to any one of the claims 1 to 9, **characterised in that** said gelling agent is present in the lipid emulsion in an amount of between 1 and 10% by weight of the enrichment product without said optional solid particles, and comprises preferably a food gum, in particular CMC and/or HPMC, and more preferably HPMC

11. Enrichment product according to any one of the claims 1 to 10, **characterised in that** it comprises, in addition to said lipid emulsion, further solid particles which are distributed in a matrix formed by the lipid emulsion and which have a size smaller than 500 µm, preferably smaller than 100 µm, the further solid particles being preferably substantially homogeneously distributed in the lipid emulsion matrix.

12. Enrichment product according to any one of the claims 1 to 11, **characterised in that** it contains, in addition to said lipid emulsion and measured without said optional solid particles, more than 1% by weight, preferably more than 2% by weight, and more preferably more than 5% by weight dry matter algal cells and/or algal fragments which are distributed in a matrix formed by the lipid emulsion, the algal cells and/or algal fragments being preferably substantially homogeneously distributed in the lipid emulsion matrix.

13. Enrichment product according to any one of the claims 1 to 12, **characterised in that** it comprises at least one anti-microbial agent, in particular an anti-microbial agent dissolved in the aqueous phase of the emulsion.

14. Enrichment product according to any one of the claims 1 to 13, **characterised in that** it comprises at least one probiotic micro-organism, the probiotic micro-organism being present in an amount of at least 10⁷ colony forming units per gram emulsion if the probiotic micro-organism is a living micro-organism, or in an amount of at least 10⁷ cells per gram emulsion if the probiotic micro-organism is a dead micro-organism and/or a yeast.

15. Method to culture fish or crustaceans, in particular shrimp, wherein live prey aquatic organisms, in particular filter feeding organisms such as *Artemia* and/or rotifers, are enriched in an enrichment medium with an enrichment product before being fed in a culture medium to larvae of the fish or crustaceans, the enrichment product comprising a lipid emulsion consisting for 25 to 80% by weight of an aqueous phase and for 20 to 75% by weight of a lipid phase, **characterised in that** the live prey aquatic organisms are enriched with an enrichment product according to any one of the claims 1 to 14.

16. Method according to claims 15 **characterised in that** the enrichment product comprises at least one disinfecting agent in such an amount as to negatively affect growth of harmful micro-organisms in said enrichment medium.

17. Method according to claims 15 or 16, **characterised in that** the live prey aquatic organisms are *Artemia* nauplii, which are enriched in an enrichment medium in a density of more than 350 nauplii per ml, preferably of more than 400 nauplii per ml and most preferably of more than 450 nauplii per ml enrichment medium.

## Patentansprüche

1. Anreicherungsprodukt für Wasserlebewesen, insbesondere für Lebewesen, die sich durch das Ausfiltern von Kleinlebewesen ernähren, wie *Artemia* oder Rotifera, das eine Lipidemulsion umfasst, zu 25 bis 80 Gew.% bestehend aus einer wässrigen Phase und zu 20 bis 75 Gew.% aus einer Lipidphase, wobei die Lipidphase Lipide enthält und in der wässrigen Phase dispergiert ist, **dadurch gekennzeichnet, dass** das Anreicherungsprodukt optional feste Partikel enthält, die eine Größe von mehr als 500 µm haben und in Wasser von 20°C substanziell unlöslich sind, dadurch, dass das Anreicherungsprodukt, gemessen ohne die optionalen festen Partikel, zu zumindest 30 Gew.%, und vorzugsweise zu zumindest 50 Gew.%, aus der erwähnten Emulsion besteht, und dadurch, dass die wässrige Phase der erwähnten Emulsion zumindest ein Geliermittel enthält, sodass die wässrige Phase in Form eines Gels vorliegt, das in destilliertem Wasser von 20°C löslich ist, und das Anreicherungsprodukt in Form eines Gelkörpers, wobei der Gelkörper zumindest 1 Gramm der erwähnten Emulsion enthält und beim Auflösen in Wasser stabile Fetttröpfchen freigibt.

2. Anreicherungsprodukt nach Anspruch 1, **dadurch gekennzeichnet, dass** die stabilen Fetttröpfchen, die ins Wasser freigegeben werden, die Form von Mizellen haben.

3. Anreicherungsprodukt nach Anspruch 1 oder 2, **dadurch gekennzeichnet, dass** es weniger als 10 Gew.%, vorzugsweise weniger als 5 Gew.%, fester Nahrungspartikel umfasst, welche größer als 500 µm sind, und vorzugsweise weniger als 10 Gew.%, noch besser weniger als 5 Gew.%, fester Nahrungspartikel umfasst, welche größer als 100 µm sind.

4. Anreicherungsprodukt nach jedem der Ansprüche 1 bis 3, **dadurch gekennzeichnet, dass** das Geliermittel und dessen Menge so ausgewählt werden, dass es zwischen 0,5 und 5 Stunden dauert, bis das Anreicherungsprodukt 50 Gew.% seiner Emulsion freigegeben hat, wenn ein kugelförmiges Stück des Anreicherungsprodukts, welches ohne jeglichen der erwähnten optionalen festen Partikel 5 Gramm wiegt, in 300 ml destilliertes Wasser von 20°C gelegt wird, das sich in einem zylindrischen Becher mit flachem Boden und einem Innendurchmesser von 85 mm befindet und das mit einem zylindrischen Magnetstab, der auf dem Boden des Bechers, unter dem Stück Anreicherungsprodukt, rotiert und eine Länge von 40 mm und einen Durchmesser von 8 mm hat, konstant mit 120 U/min umgerührt wird.

5. Anreicherungsprodukt nach Anspruch 4, **dadurch gekennzeichnet, dass** das Geliermittel und dessen Menge ferner so ausgewählt werden, dass zumindest 5 Gew.% der Emulsion des Anreicherungsprodukts eine halbe Stunde, nachdem ein kugelförmiges Stück des Anreicherungsprodukts, welches ohne jeglichen der erwähnten optionalen festen Partikel 5 Gramm wiegt, in 300 ml destilliertes Wasser von 20°C gelegt wurde, das sich in einem zylindrischen Becher mit flachem Boden und einem Innendurchmesser von 85 mm befindet und das mit einem zylindrischen Magnetstab, der auf dem Boden des Bechers, unter dem Stück Anreicherungsprodukt, rotiert und eine Länge von 40 mm und einen Durchmesser von 8 mm hat, konstant mit 120 U/min umgerührt wird, freigegeben ist.

6. Anreicherungsprodukt nach jedem der Ansprüche 1 bis 5, **dadurch gekennzeichnet, dass** die erwähnte Emulsion zumindest 30 Gew.%, vorzugsweise zumindest 45 Gew.% und am besten zumindest 55 Gew.% der erwähnten Lipide enthält.

7. Anreicherungsprodukt nach jedem der Ansprüche 1 bis 6, **dadurch gekennzeichnet, dass** es, gemessen ohne die erwähnten optionalen festen Partikel, zu zumindest 60 Gew.%, vorzugsweise zu zumindest 70 Gew.% und am besten zu zumindest 80 Gew.% aus der erwähnten Lipidemulsion besteht.

8. Anreicherungsprodukt nach jedem der Ansprüche 1 bis 7, **dadurch gekennzeichnet, dass** die erwähnten Lipide Fettsäuren umfassen, von denen zumindest 20 Gew.% (n-3) hoch ungesättigte Fettsäuren sind, welche mehr als zwei Doppelbindungen enthalten und eine Kettenlänge von zumindest zwanzig Kohlenstoffatomen haben.

9. Anreicherungsprodukt nach jedem der Ansprüche 1 bis 8, **dadurch gekennzeichnet, dass** der erwähnte Gelkörper ein Gewicht von zumindest 10 g, vorzugsweise zumindest 50 g, noch besser zumindest 100 g und am besten zumindest 200 g hat, wobei das Gewicht der erwähnten optionalen festen Partikel nicht eingeschlossen ist.

10. Anreicherungsprodukt nach jedem der Ansprüche 1 bis 9, **dadurch gekennzeichnet, dass** das erwähnte Geliermittel in der Lipidemulsion in einer Menge von zwischen 1 und 10 Gew.% des Anreicherungsprodukts ohne die erwähnten optionalen festen Partikel vorhanden ist und vorzugsweise ein lebensmitteltaugliches Gummi, insbesondere CMC und/oder HPMC, und vorzugsweise HPMC umfasst.

11. Anreicherungsprodukt nach jedem der Ansprüche 1 bis 10, **dadurch gekennzeichnet, dass** es, zusätzlich zur erwähnten Lipidemulsion, weitere feste Partikel umfasst, die in einer Matrix verteilt sind, welche durch die Lipidemulsion gebildet ist, und welche eine Größe von weniger als 500 µm, vorzugweise weniger als 100 µm haben, wobei die weiteren festen Partikel vorzugsweise homogen in der Lipidemulsion als Matrix verteilt sind.

12. Anreicherungsprodukt nach jedem der Ansprüche 1 bis 11, **dadurch gekennzeichnet, dass** es, zusätzlich zur erwähnten Lipidemulsion und gemessen ohne die erwähnten festen Partikel, mehr als 1 Gew.%, vorzugsweise mehr als 2 Gew.% und noch besser mehr als 5 Gew.% Trockenmasse von Algenzellen und/oder Algenfragmenten enthält, die in einer Matrix gebildet aus der Lipidemulsion verteilt sind, wobei die Algenzellen und/oder Algenfragmente vorzugsweise substanziell homogen in der Lipidemulsion als Matrix verteilt sind.

13. Anreicherungsprodukt nach jedem der Ansprüche 1 bis 12, **dadurch gekennzeichnet, dass** es zumindest ein antimikrobielles Mittel enthält, insbesondere ein in der wässrigen Phase der Emulsion gelöstes antimikrobielles Mittel.

14. Anreicherungsprodukt nach jedem der Ansprüche 1 bis 13, **dadurch gekennzeichnet, dass** es zumindest einen probiotischen Mikroorganismus enthält, wobei der probiotische Mikroorganismus in einer Menge von zumindest 10⁷ Kolonie bildenden Einheiten pro Gramm Emulsion anwesend ist, wenn der probiotische Mikroorganismus ein lebender Mikroorganismus ist, oder in einer Menge von zumindest 10⁷ Zellen pro Gramm Emulsion, wenn der probiotische Mikroorganismus ein toter Mikroorganismus und/oder eine Hefe ist.

15. Verfahren zur Züchtung von Fischen oder Schalentieren, insbesondere Garnelen, wobei lebende Beutewasserlebewesen, insbesondere Lebewesen, die sich durch das Ausfiltern von Kleinlebewesen ernähren, wie *Artemia* oder Rotifera, in einem Anreicherungsmedium mit einem Anreicherungsprodukt angereichert werden, bevor sie in einem Kulturmedium an Larven der Fische oder Schalentiere verfüttert werden, wobei das Anreicherungsprodukt eine Lipidemulsion umfasst, bestehend zu 25 bis 80 Gew.% aus einer wässrigen Phase und zu 20 bis 75 Gew.% aus einer Lipidphase, **dadurch gekennzeichnet, dass** die lebenden Beutewasserlebewesen mit einem Anreicherungsprodukt nach jedem der Ansprüche 1 bis 14 angereichert sind.

16. Verfahren nach Anspruch 15, **dadurch gekennzeichnet, dass** das Anreicherungsprodukt zumindest ein Desinfektionsmittel in einer solchen Menge enthält, dass es das Wachstum von schädlichen Mikroorganismen im erwähnten Anreicherungsmedium negativ beeinflusst.

17. Verfahren nach Anspruch 15 oder 16, **dadurch gekennzeichnet, dass** die lebenden Beutewasserlebewesen *Artemia* nauplii sind, die in einem Anreicherungsmedium in einer Dichte von mehr als 350 nauplii pro ml, vorzugsweise mehr als 400 nauplii pro ml und am besten mehr als 450 nauplii pro ml Anreicherungsmedium angereichert sind.

## Revendications

1. Produit d'enrichissement pour organismes aquatiques, en particulier pour des organismes alimentaires filtrants tels que des *Artemia* ou des rotifères, comprenant une émulsion lipidique consistant pour 25 à 80 % en poids en une phase aqueuse et pour 20 à 75 % en poids en une phase lipidique, laquelle phase lipidique contient des lipides et est dispersée dans la phase aqueuse, **caractérisé en ce que** le produit d'enrichissement comprend facultativement des particules solides qui ont une taille supérieure à 500 µm et qui sont essentiellement insolubles dans l'eau à 20° C, **en ce que** le produit d'enrichissement, mesuré sans lesdites particules solides facultatives, consiste pour au moins 30 % en poids, et de préférence pour au moins 50 % en poids, en ladite émulsion, et **en ce que** la phase aqueuse de ladite émulsion contient au moins un agent gélifiant de sorte que la phase aqueuse se présente sous la forme d'un gel qui est soluble dans l'eau distillée à 20° C et le produit d'enrichissement sous la forme d'un corps gélifié, lequel corps gélifié comprend au moins 1 gramme de ladite émulsion et libère des globules de lipides stables quand il est dissous dans de l'eau.

2. Produit d'enrichissement selon la revendication 1, **caractérisé en ce que** les globules de lipides stables libérés dans l'eau se présentent sous la forme de micelles.

3. Produit d'enrichissement selon la revendication 1 ou 2, **caractérisé en ce qu'**il comprend moins de 10 % en poids, de préférence moins de 5 % en poids, de particules alimentaires solides qui sont supérieures à 500 µm, et de préférence moins de 10 % en poids, plus préférablement moins de 5 % en poids, de particules alimentaires solides qui sont supérieures à 100 µm.

4. Produit d'enrichissement selon l'une quelconque des revendications 1 à 3, **caractérisé en ce que** l'agent gélifiant et la quantité de celui-ci sont choisis afin qu'il faille entre 0,5 et 5 heures pour que le produit d'enrichissement libère 50 % en poids de son émulsion quand on introduit un morceau sphérique du produit d'enrichissement, qui mesure 5 grammes sans aucune desdites particules solides facultatives, dans 300 ml d'eau distillée à 20° C qui est contenue dans un bécher cylindrique à fond plat ayant un diamètre intérieur de 85 mm et qui est continuellement agité à 120 tours / minute avec une tige magnétique cylindrique qui tourne sur le fond du bécher, en dessous du morceau de produit d'enrichissement, et a une longueur de 40 mm et un diamètre de 8 mm.

5. Produit d'enrichissement selon la revendication 4, **caractérisé en ce que** l'agent gélifiant et la quantité de celui-ci sont en outre choisis de telle manière qu'au moins 5 % en poids de l'émulsion du produit d'enrichissement soient libérés 0,5 heure après avoir introduit un morceau sphérique du produit d'enrichissement, qui mesure 5 grammes sans aucune desdites particules solides facultatives, dans 300 ml d'eau distillée à 20° C qui est contenue dans un bécher cylindrique à fond plat ayant un diamètre intérieur de 85 mm et qui est continuellement agité à 120 tours / minute avec une tige magnétique cylindrique qui tourne sur le fond du bécher, en dessous du morceau de produit d'enrichissement, et a une longueur de 40 mm et un diamètre de 8 mm.

6. Produit d'enrichissement selon l'une quelconque des revendications 1 à 5, **caractérisé en ce que** ladite émulsion comprend au moins 30 % en poids, de préférence au moins 45 % en poids et plus préférablement au moins 55 % en poids desdits lipides.

7. Produit d'enrichissement selon l'une quelconque des revendications 1 à 6, **caractérisé en ce que,** mesuré sans lesdites particules solides facultatives, il consiste pour au moins 60 % en poids, de préférence pour au moins 70 % en poids et plus préférablement pour au moins 80 % en poids en ladite émulsion lipidique.

8. Produit d'enrichissement selon l'une quelconque des revendications 1 à 7, **caractérisé en ce que** lesdits lipides comprennent des acides gras, dont au moins 20 % en poids sont des acides gras hautement insaturés (n-3) contenant plus de deux doubles liaisons et ayant une longueur de chaîne d'au moins vingt atomes de carbone.

9. Produit d'enrichissement selon l'une quelconque des revendications 1 à 8, **caractérisé en ce que** ledit corps gélifié a un poids d'au moins 10 g, de préférence d'au moins 50 g, plus préférablement d'au moins 100 g et le plus préférablement d'au moins 200 g, le poids desdites particules solides facultatives non compris.

10. Produit d'enrichissement selon l'une quelconque des revendications 1 à 9, **caractérisé en ce que** ledit corps gélifié est présent dans l'émulsion lipidique dans une quantité comprise entre 1 et 10 % en poids du produit d'enrichissement sans lesdites particules solides facultatives, et comprend de préférence une gomme alimentaire, en particulier du CMC et / ou du HPMC, et plus préférablement du HPMC.

11. Produit d'enrichissement selon l'une quelconque des revendications 1 à 10, **caractérisé en ce qu'**il comprend, en plus de ladite émulsion lipidique, d'autres particules solides qui sont distribuées dans une matrice formée par l'émulsion lipidique et qui ont une taille inférieure à 500 µm, de préférence inférieure à 100 µm, les autres particules solides étant de préférence distribuées de manière essentiellement homogène dans la matrice d'émulsion lipidique.

12. Produit d'enrichissement selon l'une quelconque des revendications 1 à 11, **caractérisé en ce qu'**il comprend, en plus de ladite émulsion lipidique et mesuré sans lesdites particules solides facultatives, plus de 1 % en poids, de préférence plus de 2 % en poids, et plus préférablement plus de 5 % en poids, sur base de matière sèche, de cellules d'algue et/ou fragments cellulaires d'algue qui sont distribués dans une matrice formée par l'émulsion lipidique, les cellules d'algue et / ou fragments cellulaires d'algue étant de préférence distribués de manière essentiellement homogène dans la matrice d'émulsion lipidique.

13. Produit d'enrichissement selon l'une quelconque des revendications 1 à 12, **caractérisé en ce qu'**il comprend au moins un agent antimicrobien, en particulier un agent antimicrobien dissous dans la phase aqueuse de l'émulsion.

14. Produit d'enrichissement selon l'une quelconque des revendications 1 à 13, **caractérisé en ce qu'**il comprend au moins un micro-organisme probiotique, le micro-organisme probiotique étant présent dans une quantité d'au moins 10⁷ unités formant colonies par gramme d'émulsion si le micro-organisme probiotique est un micro-organisme vivant, ou dans une quantité d'au moins 10⁷ cellules par gramme d'émulsion si le micro-organisme probiotique est un micro-organisme mort et / ou une levure.

15. Procédé pour cultiver des poissons ou des crustacés, en particulier des crevettes, dans lequel des organismes - proies aquatiques vivants, en particulier des organismes alimentaires filtrants tels que des *Artemia* et / ou des rotifères, sont enrichis dans un milieu d'enrichissement avec un produit d'enrichissement avant d'être fournis comme nourriture dans un milieu de culture à des larves des poissons ou des crustacés, le produit d'enrichissement comprenant une émulsion lipidique consistant pour 25 à 80 % en poids en une phase aqueuse et pour 20 à 75 % en poids en une phase lipidique, **caractérisé en ce que** les organismes - proies aquatiques vivants sont enrichis avec un produit d'enrichissement selon l'une quelconque des revendications 1 à 14.

16. Procédé selon la revendication 15, **caractérisé en ce que** le produit d'enrichissement comprend au moins un agent désinfectant dans une quantité suffisante pour affecter négativement la croissance de micro-organismes nocifs dans ledit milieu d'enrichissement.

17. Procédé selon la revendication 15 ou 16, **caractérisé en ce que** les organismes - proies aquatiques vivants sont des *Artemia* nauplii qui sont enrichis dans un milieu d'enrichissement dans une densité de plus de 350 nauplii par ml, de préférence de plus de 400 nauplii par ml et le plus préférablement de plus de 450 nauplii par ml de milieu d'enrichissement.
